# EUROPÄISCHE PATENTSCHRIFT

(11) **EP 3 010 672 B1**
(45) Veröffentlichungstag und Bekanntmachung des Hinweises auf die Patenterteilung: **01.10.2025**
(21) Anmeldenummer: 14728971.4
(22) Anmeldetag: 06.06.2014
(51) Int. Cl.: B22F 12/70, B22F 12/67, B22F 10/28, B29C 64/245, B29C 64/153, B29C 64/214, B29C 64/295, B29C 64/371, B22F 12/10, B33Y 30/00, B33Y 10/00, B22F 3/105, B33Y 50/02, B29C 67/00

(54) **VORRICHTUNG UND VERFAHREN ZUR GENERATIVEN HERSTELLUNG ZUMINDEST EINES BAUTEILBEREICHS EINES BAUTEILS**
DEVICE AND METHOD FOR THE ADDITIVE MANUFACTURING OF AT LEAST ONE COMPONENT REGION OF A COMPONENT
DISPOSITIF ET PROCÉDÉ DE FABRICATION ADDITIVE D'AU MOINS UNE PARTIE D'UNE PIÈCE

(30) Priorität: 20.06.2013 DE 102013211675
(43) Veröffentlichungstag der Anmeldung: 27.04.2016
(73) Patentinhaber: EOS GmbH Electro Optical Systems, 82152 Krailling (DE)
(72) Erfinder: JAKIMOV, Andreas, 81245 München (DE); SCHLICK, Georg, 80995 München (DE); HANRIEDER, Herbert, 85411 Hohenkammer (DE); LEUTERER, Martin, 82140 Olching (DE)
(74) Vertreter: Hofstetter, Schurack & Partner
(86) Internationale Anmeldenummer: PCT/EP2014/061866
(87) Internationale Veröffentlichungsnummer: WO 2014/202413

(56) Entgegenhaltungen:
- EP-A1- 2 492 084
- EP-A1- 2 857 139
- EP-A1- 3 131 740
- WO-A1-2005/025781
- WO-A2-02/36331
- WO-A2-2006/121797
- DE-A1- 102004 041 633
- US-B2- 6 905 645

## Beschreibung

Die Erfindung betrifft eine Vorrichtung zur generativen Herstellung zumindest eines Bauteilbereichs eines Bauteils, insbesondere eines Bauteils einer Strömungsmaschine. Die Erfindung betrifft weiterhin ein Verfahren zur generativen Herstellung zumindest eines Bauteilbereichs eines Bauteils sowie eine Absaug- und/oder Gaszuführungsvorrichtung zur Verwendung in einer Vorrichtung zur generativen Herstellung zumindest eines Bauteilbereichs eines Bauteils.

Verfahren und Vorrichtungen zur Herstellung von Bauteilen sind in einer großen Vielzahl bekannt. Insbesondere sind generative Fertigungsverfahren (sog. Rapid Manufacturing- bzw. Rapid Prototyping-Verfahren) bekannt, bei denen das Bauteil durch pulverbettbasierte, additive Fertigungsverfahren schichtweise aufgebaut wird. Vorwiegend metallische Bauteile können beispielsweise durch Laser- bzw. Elektronenstrahlschmelz- oder -sinterverfahren hergestellt werden. Dabei wird zunächst schichtweise mindestens ein pulverförmiger Bauteilwerkstoff auf eine Bauteilplattform im Bereich einer Aufbau- und Fügezone der Vorrichtung aufgetragen. Anschließend wird der Bauteilwerkstoff schichtweise lokal verschmolzen und/oder versintert, indem dem Bauteilwerkstoff im Bereich der Aufbau- und Fügezone Energie mittels wenigstens eines Hochenergiestrahls, zum Beispiel eines Elektronen- oder Laserstrahls zugeführt wird. Der Hochenergiestrahl wird dabei in Abhängigkeit einer Schichtinformation der jeweils herzustellenden Bauteilschicht gesteuert. Nach dem Verschmelzen und/oder Versintern wird die Bauteilplattform schichtweise um eine vordefinierte Schichtdicke abgesenkt. Danach werden die genannten Schritte bis zur endgültigen Fertigstellung des Bauteils wiederholt.

Aus dem Stand der Technik sind insbesondere auch generative Herstellverfahren für die Herstellung von Bauteilen einer Strömungsmaschine, wie beispielsweise von Bauteilen eines Flugtriebwerks oder einer Gasturbine bekannt, z.B. das in der DE 10 2009 051 479 A1 beschriebene Verfahren bzw. eine entsprechende Vorrichtung zur Herstellung eines Bauteils einer Strömungsmaschine.

Bei diesem Verfahren wird durch schichtweisen Auftrag von mindestens einem pulverförmigen Bauteilwerkstoff auf einer Bauteilplattform im Bereich einer Aufbau- und Fügezone sowie schichtweises und lokales Schmelzen oder Sintern des Bauteilwerkstoffs mittels im Bereich der Aufbau- und Fügezone zugeführter Energie ein entsprechendes Bauteil hergestellt. Die Zufuhr der Energie erfolgt hierbei über Laserstrahlen, wie beispielsweise CO2-Laser, Nd:YAG-Laser, Yb-Faserlaser sowie Diodenlaser, oder durch Elektronenstrahlen. Bei dem in der DE 10 2009 051 479 A1 beschriebenen Verfahren wird weiterhin das erzeugte Bauteil bzw. die Aufbau- und Fügezone auf eine Temperatur knapp unterhalb des Schmelzpunkts des Bauteilwerkstoffs mittels eines Zonenofens erwärmt, um eine gerichtet erstarrte oder einkristalline Kristallstruktur aufrechtzuerhalten.

Aus der DE 10 2006 058 949 A1 ist ebenfalls eine Vorrichtung und ein Verfahren zur schnellen Herstellung und Reparatur von Schaufelspitzen von Schaufeln einer Gasturbine, insbesondere eines Flugtriebwerks bekannt, wobei eine induktive Heizung zusammen mit Laser- oder Elektronenstrahlsintern eingesetzt wird.

Eine induktive Heizung des herzustellenden Bauteils im Zusammenhang mit der generativen Herstellung eines Bauteils mit Hilfe von selektivem Laserschmelzen ist auch in der EP 2 359 964 A1 beschrieben.

Die WO 2008/071165 A1 beschreibt wiederum eine Vorrichtung und ein Verfahren zur Reparatur von Turbinenschaufeln von Gasturbinen mittels Pulverauftragsschweißen, wobei für die Auftragsschweißung eine Strahlungsquelle, wie ein Laser oder ein Elektronenstrahl, Verwendung findet. Zugleich wird über eine Induktionsspule eine Heizvorrichtung zur Beheizung der zu reparierenden Schaufel bereitgestellt.

Die DE 10 2012 206 122 A1 beschreibt eine Vorrichtung zur generativen Herstellung von Bauteilen mittels einem Laserpulverauftragsschweißen und/oder einem selektiven Bestrahlen eines Pulverbetts, wobei die Vorrichtung mindestens eine relativ zu einem oder mehreren Pulverbetträumen beweglich angeordnete Induktionsspule aufweist. Die Induktionsspulen sind dabei entlang separat ausgebildeter Schienenanordnungen linear verfahrbar. Durch die lokale und individuell auf die Geometrie des herzustellenden Bauteils angepasste induktive Erwärmung des Bauteils ist es möglich, dass Heißrissbildungen, insbesondere bei der Verwendung von Hochtemperaturlegierungen für die generative Fertigung, bei der Herstellung des Bauteils zuverlässig verhindert werden.

Die WO 2006/121 797 A2 offenbart einen Pulverbereitstellungsbehälter, der ein Kühl-/Heizgerät aufweisen kann. Zudem können an dem Pulverbereitstellungsbehälter Öffnungen oder Nippel, beispielsweise Schnellverschlüsse, zum Anordnen einer Gaszuführung, einer Abgasabführung oder einer Evakuierungseinheit angeordnet sein.

Die EP 2 857 139 A1 offenbart eine Vorrichtung zur Laser - Materialbearbeitung mit einem Laser zur Erzeugung eines Laserstrahls und einem mindestens entlang einer Raumrichtung beweglichen Laserkopf, der über einen Lichtleiter mit dem Laser verbunden ist und einen Laserstrahl abgibt, mit dem ein Material bearbeitet werden kann. Außerdem betrifft die EP 2 857 139 A1 eine Vorrichtung zum selektiven Laserschmelzen oder selektiven Lasersintern mit einer solchen Vorrichtung zur Laser - Materialbearbeitung.

Die EP 3 131 740 A1 offenbart eine Vorrichtung zum Herstellen eines dreidimensionalen Objekts durch schichtweises Verfestigen von Aufbaumaterial und weist eine Beschichtungsvorrichtung auf, die zum Aufbringen einer Schicht des Aufbaumaterials auf eine Arbeitsebene dient, sowie eine Verfestigungsvorrichtung zum selektiven Verfestigen des Aufbaumaterials in der aufgebrachten Schicht. Eine Gasabsaugdüse ist beweglich angeordnet und die Vorrichtung ist ausgebildet, eine Bewegung und/oder Orientierung der Gasabsaugdüse in Abhängigkeit von einer Anzahl von Referenzstellen zu steuern oder zu regeln.

Als nachteilig an den bekannten Vorrichtungen ist aber der Umstand anzusehen, dass die Entfernung von während des generativen Herstellungsverfahrens entstehenden Schmauchs, Spritzern und Prozessabgasen nur ungenügend oder mit relativ hohem apparativem Aufwand möglich ist. Aufgabe der vorliegenden Erfindung ist es daher, eine Vorrichtung der eingangs genannten Art zu schaffen, die eine verbesserte Entfernung von während eines generativen Herstellungsverfahrens entstehenden Schmauchs, Spritzern und/oder Prozessabgasen bei relativ geringen apparativem Aufwand ermöglicht.

Die Aufgabe wird erfindungsgemäß durch eine Vorrichtung mit den Merkmalen des Patentanspruchs 1 zur generativen Herstellung zumindest eines Bauteilbereichs eines Bauteils sowie durch ein Verfahren mit den Merkmalen des Anspruchs 5 gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Vorrichtungen als vorteilhafte Ausgestaltungen des Verfahrens und umgekehrt anzusehen sind.

Ein erster Aspekt der Erfindung betrifft eine Vorrichtung gemäß Anspruch 1 zur generativen Herstellung zumindest eines Bauteilbereichs eines Bauteils, insbesondere eines Bauteils einer Strömungsmaschine. Die Vorrichtung umfasst dabei mindestens einen Beschichter zum Auftrag von mindestens einer Pulverschicht eines Bauteilwerkstoffs auf mindestens eine Aufbau- und Fügezone mindestens einer absenkbaren Bauteilplattform, wobei der Beschichter relativ zu der Bauteilplattform bewegbar ist und mindestens eine Strahlungsquelle zum Erzeugen wenigstens eines Hochenergiestrahls, mittels welchem die Pulverschicht im Bereich der Aufbau- und Fügezone lokal zu einer Bauteilschicht verschmelzbar und/oder versinterbar ist. Zudem umfasst die Vorrichtung mindestens eine Absaug- und/oder Gaszuführungsvorrichtung, die mechanisch mit dem Beschichter verbunden ist, derart, dass ein Arbeits- und Wirkbereich des Hochenergiestrahls im Bereich der Aufbau- und Fügezone in einem Wirkbereich der Absaug- und/oder Gaszuführungsvorrichtung liegt. Durch die Anordnung der Absaug- und/oder Gaszuführungsvorrichtung an dem bewegbaren Beschichter ist es möglich, Schmauch, Spritzer und/oder Prozessabgase des generativen Herstellungsprozesses vor und/oder während und/oder nach der Belichtung mittels der Strahlungsquelle bzw. des Hochenergiestrahls in diesem Bereich zuverlässig aus der Aufbau- und Fügezone zu entfernen. Unter den Begriffen "angeordnet" oder "Anordnung" ist zu verstehen, dass die Absaug- und/oder Gaszuführungsvorrichtung direkt oder indirekt mit dem Beschichter verbunden ist. Es ist eine mechanische Verbindung mit dem Beschichter vorgesehen. Zudem können bereits vorhandene Vorrichtungen zur generativen Herstellung von Bauteilen mit einer entsprechenden Absaug- und/oder Gaszuführungsvorrichtung, die an dem Beschichter angeordnet wird, ohne Weiteres nachgerüstet werden. Da die Absaug- und/oder Gaszuführungsvorrichtung mit dem verfahrbaren Beschichter mechanisch verbunden ist, kann auf zusätzliche Verfahreinheiten zur Bewegung der Absaug- und/oder Gaszuführungsvorrichtung in den Bereich der Aufbau- und Fügezone des Bauteils verzichtet werden. Zudem besteht die Möglichkeit, dass der Aufbau- und Fügezone des Bauteils, d.h. einem Arbeits- und Wirkbereich des Hochenergiestrahls Gas zur Steuerung der Strömungsverhältnisse in diesem Bereich zugeführt wird. Es ist aber auch möglich, über die Gaszuführungsvorrichtung Inertgas der Aufbau- und Fügezone des Bauteils zur Verbesserung der Fügequalität des entstehenden Bauteils zuzuführen. Die Absaug- und/oder Gaszuführungsvorrichtung ist derart mit dem Beschichter verbunden, dass ein Arbeits- und Wirkbereich des Hochenergiestrahls im Bereich der Aufbau- und Fügezone zumindest überwiegend oder vollständig in dem Wirkbereich der Absaug- und/oder Gaszuführungsvorrichtung liegt. Dadurch ist eine besonders zuverlässige Entfernung von Schmauch, Spritzern und/oder Prozessabgasen aus dem Bereich der Aufbau- und Fügezone möglich.

In weiteren vorteilhaften Ausgestaltungen der erfindungsgemäßen Vorrichtung ist die Absaug- und/oder Gaszuführungsvorrichtung an dem Beschichter verfahrbar oder nicht-verfahrbar angeordnet. Die Absaug- und/oder Gaszuführungsvorrichtung kann an dem Beschichter nicht-verfahrbar angeordnet sein, so dass sie durch die Bewegung des Beschichters entlang bzw. über die Aufbau- und Fügezone der Bauteilplattform bewegt wird. Dadurch ist ein einfacher konstruktiver Aufbau der Vorrichtung insgesamt gegeben. Des Weiteren besteht die Möglichkeit, die Absaug- und/oder Gaszuführungsvorrichtung an dem Beschichter über eine entsprechende Verfahreinheit verfahrbar anzuordnen. Dadurch ergibt sich vorteilhafterweise die Möglichkeit, die Absaug- und/oder Gaszuführungsvorrichtung auch entgegen der Bewegungsrichtung des Beschichters zu verfahren, um so den Wirkbereich der Absaug- und/oder Gaszuführungsvorrichtung zu vergrößern.

Erfindungsgemäß weist die Vorrichtung mindestens eine Heizvorrichtung zum Erwärmen der Pulverschicht des Bauteilwerkstoffs zumindest im Bereich der Aufbau- und Fügezone der Bauteilplattform auf, wobei die Heizvorrichtung relativ zu der Bauteilplattform bewegbar ist. Dabei kann die Heizvorrichtung an dem Beschichter nicht-verfahrbar angeordnet sein, so dass diese durch die Bewegung des Beschichters entlang bzw. über die Aufbau- und Fügezone der Bauteilplattform bewegt wird. Dadurch ist ein einfacher konstruktiver Aufbau der Vorrichtung insgesamt gegeben. Zudem können bereits vorhandene Vorrichtungen zur generativen Herstellung von Bauteilen mit einer entsprechenden Heizvorrichtung, die an dem Beschichter angeordnet wird, nachgerüstet werden. Diese wird dann mit dem Beschichter über eine entsprechende Verfahreinheit des Beschichters über die Aufbau- und Fügezone der Bauteilplattform bewegt. Des Weiteren kann die mindestens eine Heizvorrichtung an dem Beschichter verfahrbar angeordnet sein. Dabei kann der Beschichter mindestens eine Verfahreinheit umfassen, an der wiederum mindestens eine Heizvorrichtung angeordnet ist. Dadurch ergibt sich vorteilhafterweise die Möglichkeit, die Heizvorrichtung auch entgegen der Bewegungsrichtung des Beschichters zu verfahren, um so einen weiteren Bereich der Aufbau- und Fügezone einer Erwärmung durch die Heizvorrichtung unterziehen zu können. Durch die Erwärmung des Bauteilwerkstoffs mittels der Heizvorrichtung werden zudem zuverlässig, insbesondere bei der Verwendung von Hochtemperaturlegierungen als Bauteilwerkstoff, Heißrissbildungen vermieden.

Die relative Bewegbarkeit des Beschichters und/oder der Heizvorrichtung relativ zu der Bauteilplattform kann entweder durch die Bewegung des Beschichters und/oder der Heizvorrichtung mittels einer entsprechenden Verfahreinheit oder durch Bewegen der Bauteilplattform erfolgen. Bei der letztgenannten Ausführungsform kann gegebenenfalls auf eine separate Verfahreinheit der Heizvorrichtung oder des Beschichters verzichtet werden.

In weiteren vorteilhaften Ausgestaltungen der erfindungsgemäßen Vorrichtung ist die Heizvorrichtung eine Induktionsspule. Dabei wird unter Induktionsspule im Rahmen der vorliegenden Erfindung jede Vorrichtung verstanden, die eine induktive Erwärmung erzeugen kann, also beispielsweise unabhängig von der Anzahl der Windungen, so dass die Induktionsspule beispielsweise auch als Induktionsschleife bezeichnet werden kann. Dabei ist es möglich, dass die Vorrichtung mehrere verfahrbare bzw. bewegbare Induktionsspulen umfasst, die in einer oder mehrerer Ebenen parallel zu einer Oberfläche der Aufbau- und Fügezone angeordnet sind. Insbesondere können zwei Induktionsspulen in zueinander gekreuzter Anordnung betrieben werden, wobei insbesondere im Kreuzungsbereich der Hochenergiestrahl der Strahlungsquelle zum Aufschmelzen und/oder Versintern des pulverförmigen Bauteilwerkstoffs vorgesehen sein kann. In einer weiteren Ausgestaltung kann eine Induktionsspule nicht-verfahrbar an dem Beschichter und eine weitere Induktionsspule über eine Verfahreinheit am Beschichter verfahrbar angeordnet sein.

In weiteren vorteilhaften Ausgestaltungen der erfindungsgemäßen Vorrichtung ist der Hochenergiestrahl ein Laser- oder Elektronenstrahl.

Ein zweiter Aspekt der Erfindung betrifft ein Verfahren gemäß Anspruch 5 zur generativen Herstellung zumindest eines Bauteilbereichs eines Bauteils, insbesondere eines Bauteils einer Strömungsmaschine. Das erfindungsgemäße Verfahren umfasst dabei zumindest folgende Schritte: a) Auftragen von mindestens einer Pulverschicht eines Bauteilwerkstoffs auf mindestens eine Aufbau- und Fügezone von mindestens einer absenkbaren Bauteilplattform; b) Schichtweises und lokales Verschmelzen und/oder Versintern des Bauteilwerkstoffs durch Zuführen von Energie mittels wenigstens eines Hochenergiestrahls im Bereich der Aufbau- und Fügezone zum Ausbilden einer Bauteilschicht; c) Schichtweises Absenken der Bauteilplattform um eine vordefinierte Schicht-dicke; und d) Wiederholen der Schritte a) bis c) bis zur Fertigstellung des Bauteilbereichs. Dabei werden vor und/oder während und/oder nach der Belichtung mittels des Hochenergiestrahls insbesondere Schmauch, Spritzer und/oder Prozessabgase des generativen Herstellungsprozesses aus der Aufbau- und Fügezone mittels mindestens einer an mindestens einem relativ zu der Bauteilplattform bewegbaren Beschichter zum Auftrag des Bauteilwerkstoffs angeordneten Absaug- und/oder Gaszuführungsvorrichtung entfernt, wobei die Absaug- und/oder Gaszuführungsvorrichtung derart mechanisch mit dem Beschichter verbunden ist, dass ein Arbeits- und Wirkbereich des Hochenergiestrahls im Bereich der Aufbau- und Fügezone in einem Wirkbereich der Absaug- und/oder Gaszuführungsvorrichtung liegt. Dadurch ist eine besonders zuverlässige Entfernung von Schmauch, Spritzern, Prozessabgasen sowie anderen unerwünschten Gasen oder Partikeln aus dem Bereich der Aufbau- und Fügezone möglich. Erfindungsgemäß ist an dem Beschichter mindestens eine Heizvorrichtung zur Erwärmung des Bauteilwerkstoffs zumindest im Bereich der Aufbau- und Fügezone der Bauteilplattform verfahrbar oder nicht-verfahrbar angeordnet.

Weitere Merkmale der Erfindung ergeben sich aus den Ansprüchen, dem im Folgenden beschriebenen Ausführungsbeispiel der erfindungsgemäßen Vorrichtung sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine schematisch dargestellte Aufsicht auf eine erfindungsgemäße Vorrichtung zur Herstellung zumindest eines Bauteilbereichs eines Bauteils;
- Fig. 2: eine schematische Schnittdarstellung der Vorrichtung gemäß Figur 1; und
- Fig. 3: eine vergrößerte schematische Darstellung eines Teilbereich der in Figur 2 in einer Schnittansicht gezeigten Vorrichtung.

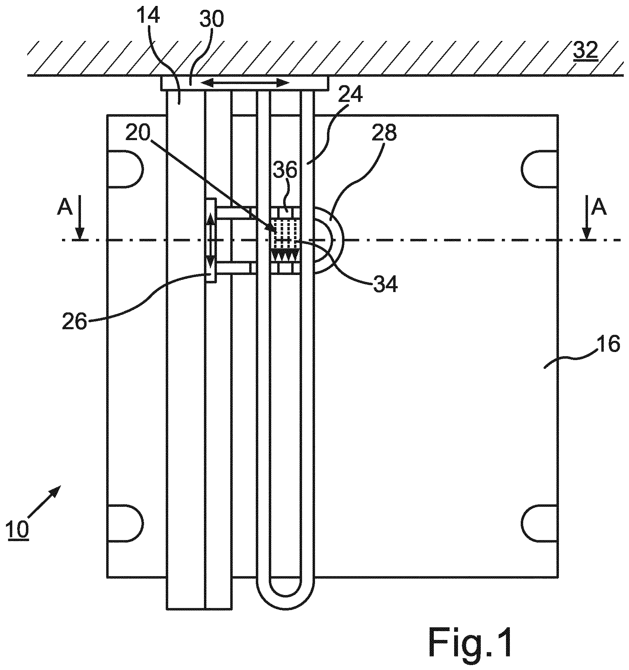

Fig. 1 zeigt eine schematisch dargestellte Aufsicht auf eine erfindungsgemäße Vorrichtung 10 zur generativen Herstellung zumindest eines Bauteilbereichs eines Bauteils, insbesondere eines Bauteils einer Strömungsmaschine. Insbesondere kann es sich dabei um ein Bauteil einer Turbine oder eines Verdichters eines Flugtriebwerks handeln. Die Vorrichtung 10 weist zudem einen Beschichter 14 zum Auftrag von mindestens einer Pulverschicht eines Bauteilwerkstoffs (nicht dargestellt) auf zumindest eine Aufbau- und Fügezone 20 einer absenkbaren Bauteilplattform 16 auf. Man erkennt, dass der Beschichter 14 mittels einer Verfahreinheit 30, welche mit einem Maschinengestell 32 der Vorrichtung 10 verbunden ist, bewegt werden kann. Die Bewegung des Beschichters 14 erfolgt dabei über und entlang der Bauteilplattform 16, so dass ein gleichmäßiger und schichtweiser Auftrag des pulverförmigen Bauteilwerkstoffs auf die Bauteilplattform 16 möglich ist.

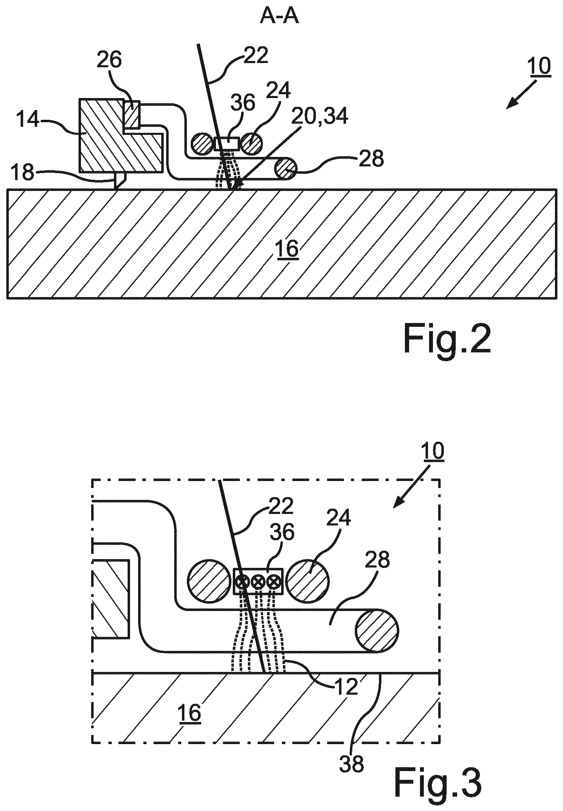

Des Weiteren erkennt man, dass an der Verfahreinheit 30 des Beschichters 14 eine erste Induktionsspule 24 angeordnet ist. Ungefährt senkrecht zu der ersten Induktionsspule 24 ist eine zweite Induktionsspule 28 an einer Verfahreinheit 26 angeordnet. Die Verfahreinheit 26 ist wiederum am Beschichter 14 angeordnet, so dass die zweite Induktionsspule 28 entlang einer Längserstreckung des Beschichters 14 bewegt werden kann. In dem dargestellten Ausführungsbeispiel sind die beiden Induktionsspulen in zueinander gekreuzter Anordnung ausgebildet. Man erkennt, dass durch eine derartige Anordnung der gesamte Bereich der Bauteilplattform 16 mittels der Induktionsspulen 24, 28 überdeckt und somit erwärmt werden kann. Des Weiteren wird deutlich, dass ein Hochenergiestrahl 22, insbesondere ein Laser- oder Elektronenstrahl, zwischen den Induktionsspulen 24, 28 hindurch auf die Pulverschicht des Bauteilwerkstoffs im Bereich einer Aufbau- und Fügezone 20 gerichtet werden kann (siehe Figur 2). Insbesondere wird der Hochenergiestrahl 22 derart ausgerichtet, dass er zwischen einen Kreuzungsbereich der Induktionsspulen 24, 28 hindurch dringen kann. Man erkennt zudem, dass durch die Anordnung der Induktionsspulen 24, 28 an den Beschichter 14 diese für die Beschichtung nicht mehr aus dem Arbeitsbereich des Beschichters 14 entfernt werden müssen. Durch die Erwärmung der Pulverschicht mittels der Induktionsspulen 24, 28 im Bereich der Aufbau- und Fügezone 20 ist es möglich, vor, während und nach den Aufschmelzen des Bauteilwerkstoffs mittels des Hochenergiestrahls 22 und mit Fortschreiten der Erstarrungsfront einerseits gleichbleibende Induktionsbedingungen zu erzielen, sodass gleichbleibende Schmelzbedingungen mit definierten, lokalen Temperaturgradienten bei hohen Produktionsgeschwindigkeiten einstellbar sind. Andererseits wird gleichzeitig die Ausbildung von Rissen und dergleichen beim Erstarren vermieden.

Man erkennt, dass an der ersten Induktionsspule 24 eine Absaug- und/oder Gaszuführungsvorrichtung 36 angeordnet ist. Durch die Anordnung der Absaug- und/oder Gaszuführungsvorrichtung 36 an der ersten Induktionsspule 24 ist es möglich, insbesondere Schmauch, Spritzer und/oder Prozessabgase des generativen Herstellungsprozesses vor und/oder während und/oder nach der Belichtung mittels der Strahlungsquelle bzw. des Hochenergiestrahls 22 zuverlässig aus der Aufbau- und Fügezone 20 zu entfernen. Ein Wirkbereich 34 der Absaug- und/oder Gaszuführungsvorrichtung 36, d.h. der Bereich der Absaugung und/oder des Gaszuführung, erstreckt sich in dem dargestellten Ausführungsbeispiel insbesondere auf den Kreuzungsbereich der Induktionsspulen 24, 28.

Fig. 2 zeigt eine schematische Schnittdarstellung der Vorrichtung 10 gemäß der Linie A-A in Fig. 1. Man erkennt, dass die mittels der Verfahreinheit 26 am Beschichter 14 angeordnete zweite Induktionsspule 28 in einer Ebene unter der ersten, an der Verfahreinheit 30 des Beschichters 14 angeordneten ersten Induktionsspule 24, relativ zur der Bauteilplattform 16 angeordnet ist. Die Absaug- und/oder Gaszuführungsvorrichtung 36 ist innerhalb einer durch die erste Induktionsspule 24 gebildeten Windung angeordnet, so dass ihr Wirkbereich 34 zumindest mit dem Bereich der Aufbau- und Fügezone 20 zur Deckung kommt. Der Hochenergiestrahl 22 ist derart ausgerichtet, dass er zwischen dem Kreuzungsbereich der Induktionsspulen 24, 28 hindurch dringen kann.

Zudem erkennt man, dass der Beschichter 14 eine Klinge 18 für den schichtweisen Auftrag des pulverförmigen Bauteilwerkstoffs (nicht dargestellt) auf der Bauteilplattform 16 aufweist. Die Klinge 18 ist dabei bewegbar ausgebildet, derart, dass sie während einer Belichtung der Pulverschicht im Bereich der Aufbau- und Fügezone 20 mittels des Hochenergiestrahls 22 in den Beschichter 14 zumindest teilweise rückziehbar ist. Alternativ zu der Klinge 18 können auch andere Glättvorrichtungen wie zum Beispiel Rakel, Lippen, ein Kämme oder Walzen verwendet werden.

Fig. 3 zeigt eine vergrößerte schematische Darstellung eines Teilbereichs der in Figur 2 in einer Schnittansicht gezeigten Vorrichtung 10. Die Absaug- und/oder Gaszuführungsvorrichtung 36 ist in dem hier dargestellten Ausführungsbeispiel als Absaugvorrichtung dargestellt, die Prozessabgase 12, die während der generativen Fertigung des Bauteils aus einem Pulverbett 38 des Bauteilwerkstoffs entstehen, absaugt. Das Pulverbett 38 ist auf die Bauteilplattform 16 aufgetragen. Der Hochenergiestrahl 22 ist wiederum derart ausgerichtet, dass er zwischen dem Kreuzungsbereich der Induktionsspulen 24, 28 hindurch bis zum Pulverbett 38 im Bereich der Aufbau- und Fügezone 20 dringen kann.

Das in den Fig. 1 bis 3 dargestellte Ausführungsbeispiel der Vorrichtung 10 kann zudem noch eine Steuerungs- und/oder Regelungseinrichtung und/oder eine Temperaturerfassungseinrichtung umfassen, wobei mit der Steuerungs- und/oder Regelungseinrichtung die Position und/oder Leistung der Induktionsspule(n) 24, 28 steuerbar und/oder in Abhängigkeit der Messergebnisse der Temperaturerfassungseinrichtung regelbar sind.

## Patentansprüche

1. Vorrichtung (10) zur generativen Herstellung zumindest eines Bauteilbereichs eines Bauteils, insbesondere eines Bauteils einer Strömungsmaschine, umfassend:
- mindestens einen Beschichter (14) zum Auftrag von mindestens einer Pulverschicht eines Bauteilwerkstoffs auf mindestens eine Aufbau- und Fügezone (20) mindestens einer absenkbaren Bauteilplattform (16), wobei der Beschichter (14) relativ zu der Bauteilplattform (16) bewegbar ist; und
- mindestens eine Strahlungsquelle zum Erzeugen wenigstens eines Hochenergiestrahls (22), mittels welchem die Pulverschicht im Bereich der Aufbau- und Fügezone (20) lokal zu einer Bauteilschicht verschmelzbar und/oder versinterbar ist;
wobei mindestens eine Absaug- und/oder Gaszuführungsvorrichtung (36) mechanisch mit dem Beschichter (14) verbunden ist,
wobei die Absaug- und/oder Gaszuführungsvorrichtung (36) derart mit dem Beschichter (14) verbunden ist, dass ein Arbeits- und Wirkbereich des Hochenergiestrahls (22) im Bereich der Aufbau- und Fügezone (20) in einem Wirkbereich (34) der Absaug- und/oder Gaszuführungsvorrichtung (36) liegt,
**dadurch gekennzeichnet, dass**
an dem Beschichter (14) mindestens eine Heizvorrichtung (24, 28) zur Erwärmung des Bauteilwerkstoffs zumindest im Bereich der Aufbau- und Fügezone (20) der Bauteilplattform (16) verfahrbar oder nicht-verfahrbar angeordnet ist.

2. Vorrichtung (10) nach Anspruch 1,
**dadurch gekennzeichnet, dass**
der Beschichter (14) mindestens eine Verfahreinheit (26) umfasst, an der die mindestens eine Heizvorrichtung (28) angeordnet ist.

3. Vorrichtung (10) nach Anspruch 1 oder 2,
**dadurch gekennzeichnet, dass**
die Heizvorrichtung (24, 28) eine Induktionsspule umfasst.

4. Vorrichtung (10) nach einem der Ansprüche 1 bis 3,
**dadurch gekennzeichnet, dass**
der Hochenergiestrahl (22) einen Laser- oder Elektronenstrahl umfasst.

5. Verfahren zur generativen Herstellung zumindest eines Bauteilbereichs eines Bauteils, insbesondere eines Bauteils einer Strömungsmaschine, zumindest folgende Schritte umfassend:
a) Auftragen von mindestens einer Pulverschicht eines Bauteilwerkstoffs auf mindestens eine Aufbau- und Fügezone (20) von mindestens einer absenkbaren Bauteilplattform (16);
b) Schichtweises und lokales Verschmelzen und/oder Versintern des Bauteilwerkstoffs durch Zuführen von Energie mittels wenigstens eines Hochenergiestrahls (22) im Bereich der Aufbau- und Fügezone (20) zum Ausbilden einer Bauteilschicht;
c) Schichtweises Absenken der Bauteilplattform (16) um eine vordefinierte Schicht-dicke; und
d) Wiederholen der Schritte a) bis c) bis zur Fertigstellung des Bauteilbereichs,
wobei
vor und/oder während und/oder nach der Belichtung mittels des Hochenergiestrahls (22) insbesondere Schmauch, Spritzer und/oder Prozessabgase des generativen Herstellungsprozesses aus der Aufbau- und Fügezone (20) mittels mindestens einer Absaug- und/oder Gaszuführungsvorrichtung (36), die an mindestens einem relativ zu der Bauteilplattform (16) bewegbaren Beschichter (14) zum Auftrag des Bauteilwerkstoffs angeordnet ist, entfernt werden, wobei die Absaug- und/oder Gaszuführungsvorrichtung (36) derart mechanisch mit dem Beschichter (14) verbunden ist, dass ein Arbeits- und Wirkbereich des Hochenergiestrahls (22) im Bereich der Aufbau- und Fügezone (20) in einem Wirkbereich (34) der Absaug- und/oder Gaszuführungsvorrichtung (36) liegt,
**dadurch gekennzeichnet, dass**
an dem Beschichter (14) mindestens eine Heizvorrichtung (24, 28) zur Erwärmung des Bauteilwerkstoffs zumindest im Bereich der Aufbau- und Fügezone (20) der Bauteilplattform (16) verfahrbar oder nicht-verfahrbar angeordnet ist.

## Claims

1. A device (10) for generatively producing at least one component area of a component, in particular of a component of a fluid-flow machine, comprising:
- at least one coater (14) for applying at least one powder layer of a component material onto at least one construction and joining zone (20) of at least one lowerable component platform (16), wherein the coater (14) is movable in relation to the component platform (16); and
- at least one radiation source for generating at least one high-energy beam (22), by means of which the powder layer can be locally melted and/or sintered to a component layer in the area of the construction and joining zone (20);
wherein at least one suction and/or gas supply device (36) is mechanically connected to the coater (14),
wherein the suction and/or gas supply device (36) is connected to the coater (14) such that a working and effective area of the high-energy beam (22) in the area of the construction and joining zone (20) is in an effective area (34) of the suction and/or gas supply device (36),
**characterized in that**
at least one heating device (24, 28) for heating the component material at least in the area of the construction and joining zone (20) of the component platform (16) is arranged at the coater (14) in displaceable or non-displaceable manner.

2. The device (10) according to claim 1,
**characterized in that**
the coater (14) includes at least one displacing unit (26), at which the at least one heating device (28) is arranged.

3. The device (10) according to claim 1 or 2,
**characterized in that**
the heating device (24, 28) includes an induction coil.

4. The device (10) according to any one of claims 1 to 3,
**characterized in that**
the high-energy beam (22) includes a laser or electron beam.

5. A method for generatively producing at least one component area of a component, in particular of a component of a fluid-flow machine, comprising at least the following steps:
a) applying at least one powder layer of a component material onto at least one construction and joining zone (20) of at least one lowerable component platform (16);
b) locally melting and/or sintering the component material in layers by supplying energy by means of at least one high-energy beam (22) in the area of the construction and joining zone (20) for forming a component layer;
c) lowering the component platform (16) in layers by a predefined layer thickness; and
d) repeating the steps a) to c) until completion of the component area,
wherein
before and/or during and/or after exposure by means of the high-energy beam (22), in particular fume deposits, spatter and/or process exhaust gases of the generative production process are removed from the construction and joining zone (20) by means of at least one suction and/or gas supply device (36), which is arranged on at least one coater (14) movable in relation to the component platform (16) for applying the component material, wherein the suction and/or gas supply device (36) is mechanically connected to the coater (14) such that a working and effective area of the high-energy beam (22) in the area of the construction and joining zone (20) is in an effective area (34) of the suction and/or gas supply device (36),
**characterized in that**
at least one heating device (24, 28) for heating the component material at least in the area of the construction and joining zone (20) of the component platform (16) is arranged at the coater (14) in displaceable or non-displaceable manner.

## Revendications

1. Dispositif (10) pour la fabrication additive d'au moins une zone de composant d'un composant, en particulier d'un composant d'une machine à écoulement, comprenant :
- au moins un applicateur (14) pour appliquer au moins une couche de poudre d'un matériau de composant sur au moins une zone de construction et d'assemblage (20) d'au moins une plate-forme de composant pouvant être abaissée (16), l'applicateur (14) étant mobile par rapport à la plate-forme de composant (16) ; et
- au moins une source de rayonnement pour générer au moins un faisceau à haute énergie (22) au moyen duquel la couche de poudre peut être fondue et/ou frittée dans la zone de construction et d'assemblage (20) de façon locale par rapport à une couche de composant ;
au moins un dispositif d'aspiration et/ou d'alimentation en gaz (36) étant mécaniquement relié à l'applicateur (14) ;
le dispositif d'aspiration et/ou d'alimentation en gaz (36) étant relié à l'applicateur (14) de telle sorte qu'une zone de travail et d'action du faisceau à haute énergie (22) se situe dans la zone de construction et d'assemblage (20) dans une zone d'action (34) du dispositif d'aspiration et/ou d'alimentation en gaz (36),
**caractérisé en ce qu'**
au moins un dispositif de chauffage (24, 28) est disposé sur l'applicateur (14) de manière mobile ou non mobile afin de chauffer le matériau de composant au moins dans la zone de construction et d'assemblage (20) de la plate-forme de composant (16).

2. Dispositif (10) selon la revendication 1,
**caractérisé en ce que**
l'applicateur (14) comprend au moins une unité de déplacement (26) sur laquelle le au moins un dispositif de chauffage (28) est agencé.

3. Dispositif (10) selon la revendication 1 ou 2,
**caractérisé en ce que**
le dispositif de chauffage (24, 28) comprend une bobine à induction.

4. Dispositif (10) selon l'une des revendications 1 à 3,
**caractérisé en ce que**
le faisceau à haute énergie (22) comprend un faisceau laser ou un faisceau d'électrons.

5. . Procédé pour la fabrication additive d'au moins une zone de composant d'un composant, en particulier d'un composant d'une machine à écoulement, comprenant au moins les étapes suivante consistant à :
a) appliquer au moins une couche de poudre d'un matériau de composant sur au moins une zone de construction et d'assemblage (20) d'au moins une plate-forme de composant pouvant être abaissée (16) ;
b) faire fondre et/ou fritter par couches et localement le matériau de composant en fournissant de l'énergie au moyen d'au moins un faisceau à haute énergie (22) dans la zone de construction et d'assemblage (20) afin de former une couche de composant ;
c) abaisser la plate-forme de composant (16) par couches d'une épaisseur de couche prédéfinie ; et
d) répéter les étapes a) à c) jusqu'à l'achèvement de la zone de composant,
avant et/ou pendant et/ou après l'exposition au moyen du faisceau à haute énergie (22), des dépôts, des éclaboussures et/ou des gaz d'échappement de processus du processus de fabrication additive sont en particulier retirés de la zone de construction et d'assemblage (20) au moyen d'au moins un dispositif d'aspiration et/ou d'alimentation en gaz (36) qui est disposé sur au moins un applicateur mobile par rapport à la plate-forme de composant (16) pour appliquer le matériau de composant, le dispositif d'aspiration et/ou d'alimentation en gaz (36) étant mécaniquement relié à l'applicateur (14) de telle sorte qu'une zone de travail et d'activation du faisceau à haute énergie (22) se situe dans la zone de construction et d'assemblage (20) dans une zone d'action (34) du dispositif d'aspiration et/ou d'alimentation en gaz (36),
**caractérisé en ce qu'**
au moins un dispositif de chauffage (24, 28) est disposé sur l'applicateur (14) de manière mobile ou non mobile afin de chauffer le matériau de composant au moins dans la zone de construction et d'assemblage (20) de la plate-forme de composant (16).
